# EUROPEAN PATENT APPLICATION

(11) **EP 2 163 958 A1**
(43) Date of publication of application: **17.03.2010**
(21) Application number: 09169866.2
(22) Date of filing: 09.09.2009
(51) Int. Cl.: G05B 19/05

(54) **Automated derivation of a logic controller behaviour model from a mechanical machine operation model**

(30) Priority: 11.09.2008 US 95995 P; 25.08.2009 US 546987
(71) Applicant: SIEMENS CORPORATE RESEARCH, INC., Princeton, New Jersey 08540 (US); Siemens Aktiengesellschaft, 80333 München (DE)
(72) Inventor: Noetzelmann, Oswin, Monmouth Junction, NJ 08852 (US); Heller, Rainer, 90542 Eckental (DE); Schaumburg, Dirk, 61169 Friedberg (DE)
(74) Representative: Clarke, Alison Clare

(57) **Abstract**

An electrical logic controller behavior model of logic controller behavior is automatically or semi-automatically derived from a model of mechanical machine operation. To create the electrical model, an electrical step is created corresponding to each mechanical step of the mechanical model. For each mechanical transition on the mechanical step, a corresponding electrical transition is created on the corresponding electrical step. For each identified signal associated with an end position of the mechanical step, a condition is created for the associated signal on the corresponding electrical transition. The electrical logic controller behavior model is then used to generate PLC-specific software to control a machine or plant,

## Description

This application claims priority to, and incorporates by reference herein in its entirety, pending United States Provisional Patent Application Serial Number 61/095,995, filed September 11, 2008, and entitled "Automated Derivation of a Logic-Controller-Behavior-Model from a Mechanical-Machine-Operation-Model," and is related to United States Patent Application Serial No. 12/547,015 filed on the same date as the present application and entitled "Visualization Method for Electrical Machine Operation Models Based on Mechanical Machine Operation Models."

### Field of the Disclosure

The present invention relates generally to the modeling of factory behavior for the purpose of factory automation. More specifically, the invention relates to techniques for deriving an intermediate electrical model of logic controller behavior from a model of mechanical machine operation.

### Background

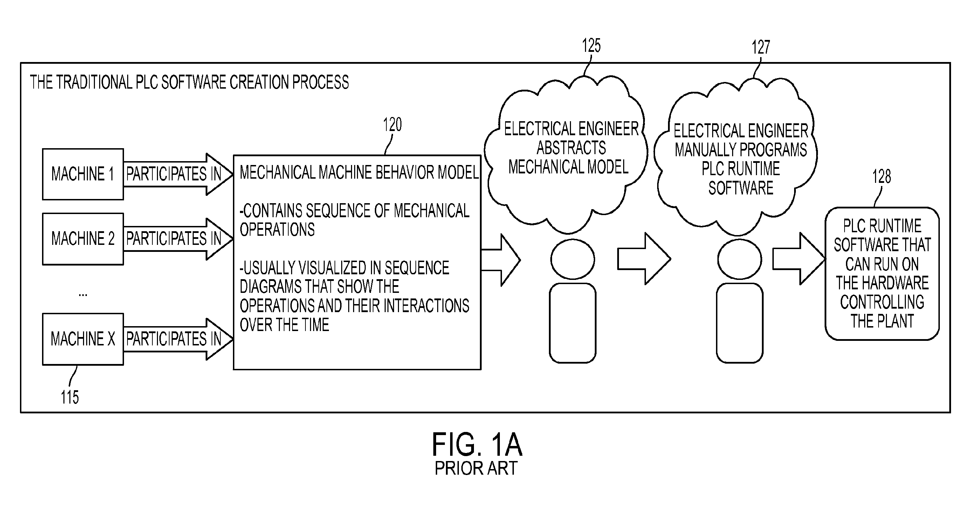

In the automation field, and more specifically during operational machine planning for a plant, an engineer traditionally creates a model that describes which machines will later be involved in the plant operation phase. Referring to FIG. 1A, the mechanical machine operation model 120 contains a detailed description of each step that each machine 115 performs in the operational process, as well as how those steps interact. The model is traditionally created in the form of a sequence diagram that shows machine behavior over time in a graphical format. Today, software tools provide meta-models for describing mechanical machine operation models and allow convenient graphical creation and editing of those mechanical models.

In order to program digital controllers to operate the machines, the mechanical machine operation model 120 is traditionally given to an engineer that is familiar with programmable logic controller (PLC) programming and he or she abstracts the mechanical model at 125 and creates at 127 a PLC program 128 that realizes the requirements described in the mechanical model 120. For example, the logic may include logic for starting/stopping signals for the machines in the correct timing, as well as safety critical features such as interlocks and timeout detection. The engineer typically adds sensors and actuators to the mechanical information as those are often missing in the mechanical model as provided to the engineer.

The abstraction of the mechanical model depends on the programming method the engineer chooses. Examples of methods for programming a PLC include STL (an assembler like language for Siemens PLCs), Ladder Logic and Step Chain Programming, the most advanced of the three. If a user chooses STL, the user must do the most abstraction since he must formulate a program with only basic instructions. For ladder logic, the user is assisted by a ladder diagram visual display of the logic. For step chain programming, the user must identify the steps in the program based on the mechanical description (i.e., the sequence diagram) and determine the exact sequence of the steps in the PLC, as well as identify the need for input signal conditions.

In each case, those traditional systems may be error-prone due to the required manual abstraction and the complexities faced by the engineer, and may be time-consuming for the same reasons. Because different PLCs from different manufacturers normally require different programming languages, the process must be repeated from the start if a PLC is replaced with a PLC from a different manufacturer. For at least those reasons, there is presently a need for a method and system for creating PLC programs that reduces complexity and manual abstraction, and facilitates the creation of PLC programs in multiple languages.

### Summary of the Invention

The present invention addresses the needs described above by providing, in one embodiment, a method for programming a logic controller using a mechanical machine operation model. The mechanical machine operation model includes a plurality of mechanical steps and a plurality of mechanical transitions. Each mechanical transition is between a sequential pair of mechanical steps.

In the method, electrical signals associated with end positions of the mechanical steps are identified. An electrical logic controller behavior model based on the mechanical machine operation model is then created using a computer. The electrical logic controller behavior model is created by performing the following steps for each mechanical step of the mechanical machine operation model: First, an electrical step is created corresponding to the mechanical step. Next, for each mechanical transition on the mechanical step, a corresponding electrical transition is created on the corresponding electrical step. For each identified signal associated with an end position of the mechanical step, a condition is created for the associated signal on the corresponding electrical transition. The logic controller behavior model is then translated to a program for execution by logic controller.

The logic controller behavior model may be independent of a logic controller language used in the logic controller. In that case, the step of translating the logic controller behavior model to a program for execution by the logic controller may include translating to the logic controller language used in the logic controller.

The step of identifying electrical signals associated with end positions of the mechanical steps may include identifying signals that change state at an end position of a mechanical step.

The step of creating an logic controller behavior model may additionally include adding interlock information to the logic controller behavior model by creating additional conditions, or may include adding signal output values to one or more electrical steps. The signal output values may include timeout detection.

The step of creating a logic controller behavior model based on the mechanical machine operation model may be performed using a combined electrical/mechanical representation of the models.

The step of identifying electrical signals associated with end positions of the mechanical steps may be performed manually. One or more of the mechanical steps of the mechanical machine operation model includes information may describe behavior between a start and an end of the mechanical step.

Another embodiment of the invention is a computer-usable medium having computer readable instructions stored thereon for execution by a processor to perform methods as described above.

### Brief Description of the Drawings

FIG. 1A is a schematic diagram showing a prior art PLC program creation process.

FIG. 1B is a schematic diagram showing a PLC program creation process in accordance with the present disclosure.

FIG. 2 is a sequence diagram showing an exemplary mechanical model in accordance with the present disclosure.

FIG. 3 is a schematic block diagram showing elements of models in accordance with the present disclosure.

FIG. 4 is a sequence diagram showing exemplary mechanical and electrical models in accordance with the present disclosure.

FIG. 5 is an example PLC program derived from an electrical model in accordance with the present disclosure.

FIG. 6 is a schematic diagram of a system in accordance with the present disclosure.

### Description

Disclosed herein is a new category of electrical logic controller behavior model, and methods and computer-readable media for use in deriving that model. The model may be derived automatically or semi-automatically from a mechanical machine operation model. The electrical logic controller behavior model streamlines and improves the efficiency of the engineering process that is used in the automation field to create PLC (Programmable Logic Controller) programs that control machines in a manufacturing plant, a factory, etc.

Embodiments of the invention provide methods, systems, and a computer useable medium storing computer-readable instructions for creating an electrical logic controller behavior model. The invention may be implemented as a modular framework and deployed as software as an application program tangibly embodied on a program storage device. The application code may reside on a plurality of different types of computer readable media known to those skilled in the art. Methods of the invention may be performed by a computer executing instructions contained in an application program.

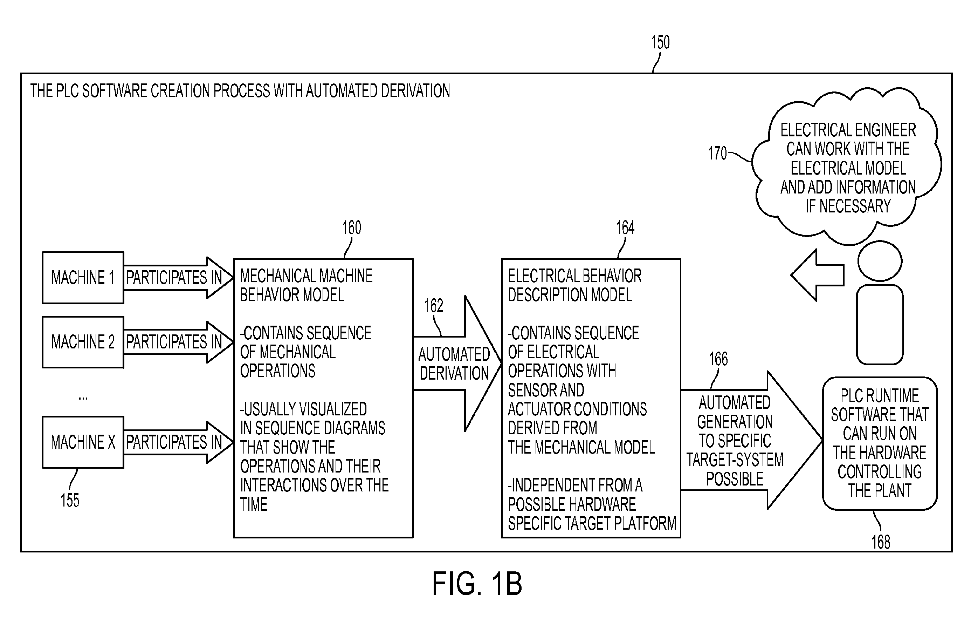

As shown in FIG. 1B, the electrical logic controller behavior model 164 disclosed herein may be used in an automatic generation process 150 for target-system-specific PLC programs 168. The process begins with a mechanical machine operation model 160 containing descriptions of each step performed by each machine 155, as well as how those steps interact. Using an automated or partially automated derivation process 162, described in more detail below, an intermediate electrical logic controller behavior model 164 is produced. PLC runtime software 168 is then automatically generated at 166 from the electrical model 164. The runtime software 168 is specifically targeted to the system used in controlling the plant. The electrical model may be modified manually at 170 to add information such as interlocks and additional signal input conditions as well as signal outputs.

In the present disclosure, the following two aspects of the process 150 will be described in detail. First, the intermediate electrical logic controller behavior model 164, containing information about an electrical sequence, will be described. Second, an automated method 162 that derives the electrical logic controller behavior model from a mechanical operation machine is discussed.

Electrical Logic Controller Behavior Model

The electrical logic controller behavior model may be seen as a model that is between a PLC program and a mechanical machine operation model or sequence graph. Like the PLC program and mechanical machine operation model, it is a directed, non-circular graph where the nodes are called steps and the edges are called transitions.

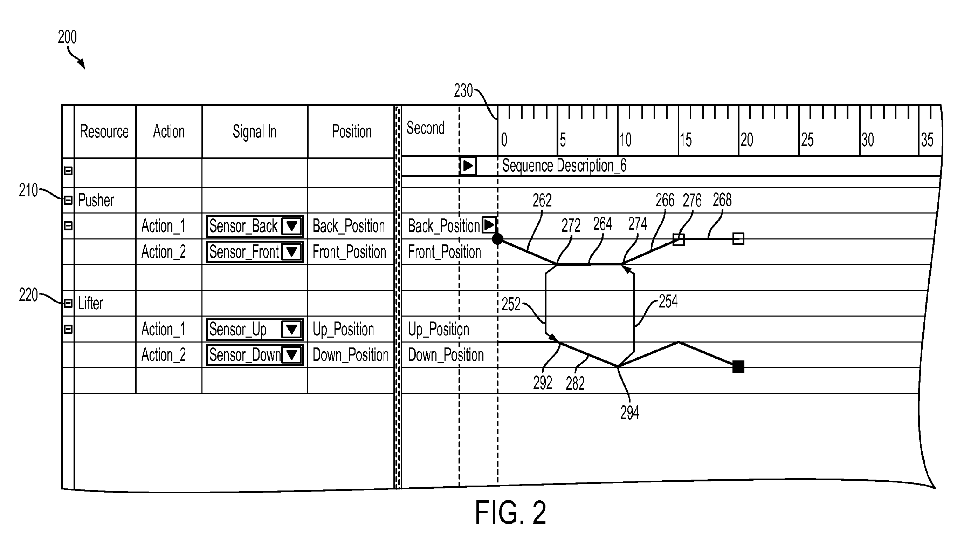

To illustrate an exemplary logic controller behavior model, an underlying mechanical machine operation model 200 will first be described with reference to FIG. 2. In FIG. 2, machines or devices are represented by a row in a chart, including the row 210 representing a pusher and the row 220 representing a lifter. The model also includes operational steps and transitions between the steps, shown as timing behavior in rows 210, 220 along a horizontal time line 230.

A mechanical step describes a change in the state of the machine. The state may, for example, be a physical position. Because a change in a state often represents a change in physical position, a state is often referred to as a "position." The changes in position are described in the timing behavior of the model. In the example model 200, the pusher represented in row 210 moves from a "back" position to a "front" position in step 262, remains in the "front" position during a waiting period 264, moves from the "front" position to the "back" position in step 266, and remains in the "back position during the waiting period 268. Changes in the position of the lifter between "up" and "down" are similarly represented in row 220.

In its simplest form, a mechanical machine operation model identifies only the start and end positions defining a change in position. The exact physical behavior between the start and end points, including intermediate positions, velocity and acceleration, is not described in the simplest case. For example, the straight line segments representing steps 262 and 266 do not represent information about the behavior of the devices between the start and end points. An expanded mechanical machine operation model, however, may accommodate such information. The information about the changes in position as well as the connected timing behavior can be grouped into an operation type - also called an "action." In sum, devices can perform actions, and each performance of an action is called a step.

The sequence of steps is defined by transitions. For example, the timing behavior of the pusher 210 includes a transition 272 between step 262 and waiting period 264, a transition 274 between the waiting period 264 and step 266, and a transition 276 between step 266 and the waiting period 268.

The electrical logic controller behavior model is based on the mechanical model. It also includes steps and transitions, but does not include actions. The steps of the logic controller behavior model may additionally include so-called waiting steps wherein a user can add waiting times in the electrical model. The transitions of the intermediate electrical model may be very different from those of the mechanical model, because it is possible for a user to represent one mechanical sequence with *multiple* electrical sequences. For example, a user may define one electrical sequence per device. An important difference between the electrical model and the mechanical model is the fact that the electrical model has information about electrical (sensor and actuator) signals. The electrical logic controller behavior model stores conditions for those signals on transitions that are between electrical steps.

In the process described in this disclosure, an engineer must define sensor signals associated with a machine. Those signals are logically connected to a mechanical position. For example, in the system shown in the diagram 200 of FIG. 2, when the pusher of row 210 completes step 262 and arrives at transition 272, a sensor signal, represented by arrow 252, is generated. That signal 252 satisfies a condition for the lifter of row 220 to leave transition 292 and perform step 282. Similarly, when the lifter of row 220 completes step 282 and arrives at transition 294, a sensor signal, represented by arrow 254, is generated. That signal 254 satisfies a condition for the pusher of row 210 to leave transition 274 and perform step 266.

Electrical steps can also have interlock information, as well as additional signal output values. Those parameters, however, are not part of the automatic generation process. If necessary, they are added manually by an engineer.

The electrical model therefore includes electrical steps, transitions between the electrical steps, signals, conditions that store values for specific signals, signal output information and interlock information.

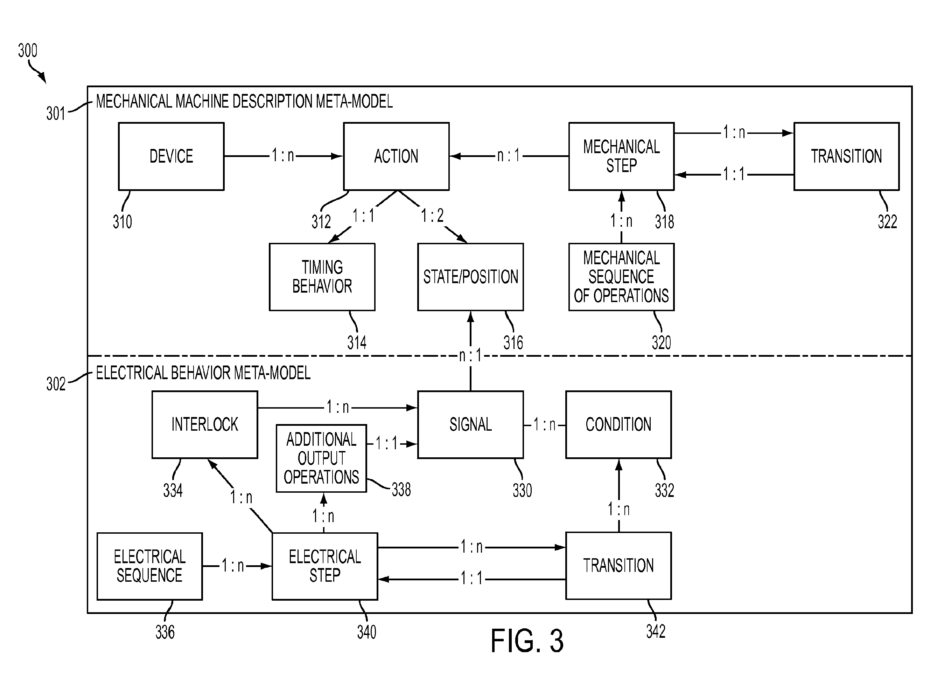

A block diagram representation 300, shown in FIG. 3, relates the mechanical machine operation model 301 and the electrical logic controller behavior model 302. In the mechanical model 301, a device 310 may perform any number of actions 312, made up of mechanical steps 318 with corresponding transitions 322 and forming a mechanical sequence of operations 320. Each action has timing behavior 314. A state/position 316 is defined both before and after each action 312.

The states/positions 316 of the mechanical model 301 define the signals 330 of the electrical model. The electrical logic controller behavior model 302 includes electrical steps 340 and electrical transitions 342 based generally on the mechanical steps 318 and transitions 322. The electrical steps form an electrical sequence 336. The signals 330 are related to the transitions 342 by conditions 332. Interlocks 334 and additional output operations 338 may also relate the signals 330 to the electrical steps 340.

Derivation of the Electrical Logic Controller Behavior Model

The creation of an electrical model from a mechanical description may be performed by relatively simple logic. The method iterates through the existing mechanical model and creates the corresponding electrical model as follows:
*1. Do the following **for each** mechanical step in the mechanical model:*
   *1.1. Create a corresponding electrical step.*
   *1.2. Do the following **for each** mechanical transition on the step:*
      *1.2.1. Create a corresponding electrical transition on the electrical step.*
      *1.2.2. Do the following **for each** Signal associated to the end-position of the current mechanical step:*
         *1.2.2.1. On the electrical transition create a condition for the current associated signal.*
The method depends strongly on the signals modeled and connected to the machine state/position by the engineer.

That logic may be replaced or enhanced by more complex techniques. One such technique is a technique using split and merge sequence descriptions. In that technique, an algorithm is used to create multiple logic controller behavior models from one mechanical description that has multiple devices. The algorithm takes into consideration a pre-assignment of devices to electrical sequences. The pre-assignment may be done by a user.
To give a simple example, a mechanical sequence contains two interacting devices and the user chooses to have the first device in a separate electrical sequence and the second device in another separate electrical sequence. The algorithm then splits the original electrical sequence into two separate electrical sequences. The logical flow of the original electrical sequence is kept in the split sequences and modeled with input signal conditions.

The mechanical model used in the method is created by the mechanical engineer based on the mechanical meta-model described above. That mechanical meta-model is able to accommodate many different kinds of traditionally manually created sequence graphs or sequence models.

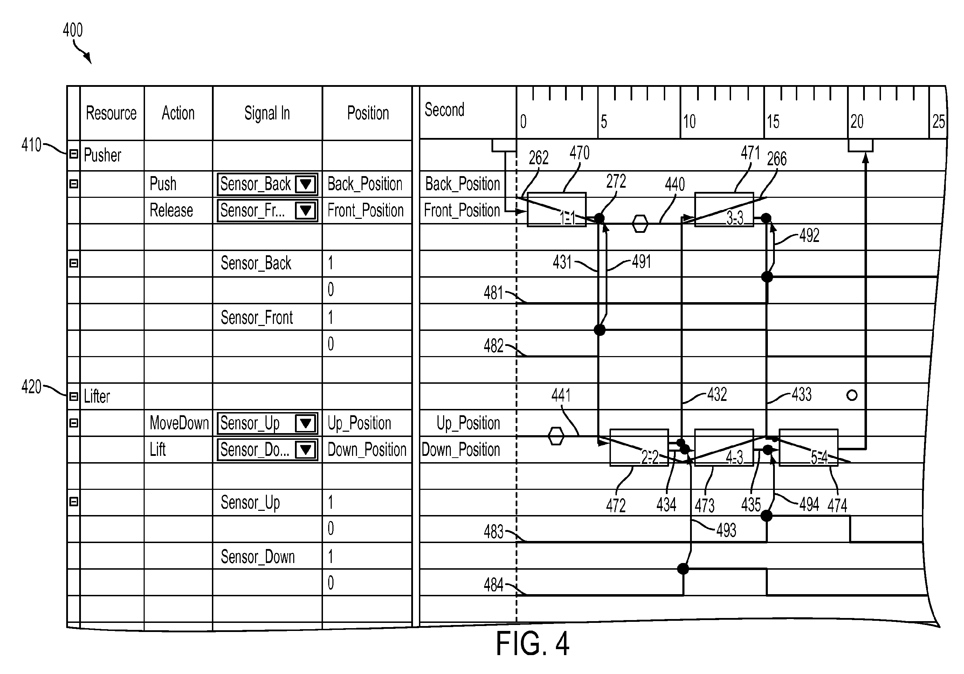

An electrical sequence diagram 400, shown in FIG. 4, provides a graphical example of an electrical logic controller behavior model that was generated with an automation/sequence designer that implements the above-described method. The electrical model of FIG. 4 was generated from the mechanical model shown in FIG. 2.

The rectangles 470, 471, 472, 473, 474 represent the electrical steps, and the connecting lines 431, 432, 433 represent electrical transitions. In the diagram of FIG. 4, the original mechanical sequence (from FIG. 2) for the pusher 410 is represented by the segmented line 440, and the original mechanical sequence for the lifter 420 is represented by the line 441. It can be seen that for each mechanical step in the mechanical model 200 (FIG. 2), an electrical step was created in the electrical logic controller behavior model 400 (FIG. 4). For example, as shown in FIG. 4, for the mechanical step 262, in which the pusher changes position from "back" to "front," the corresponding electrical step 470 is created. The other electrical steps 471, 472, 473, 474 are similarly created to correspond to mechanical steps of the mechanical model.

In some embodiments, more than one electrical step may be created corresponding to a single mechanical step. For example, where a waiting period such as waiting period 264 (FIG. 2) precedes a mechanical step such as step 266, an electrical waiting step (not shown) may be inserted in the electrical model in addition to the electrical step directly corresponding to the mechanical step 266. The waiting step exists only in the electrical model, and allows an engineer to selectively de-couple devices from each other in the sequence.

For each mechanical transition on a particular step in the mechanical model, a corresponding electrical transition is created on the corresponding electrical step in the electrical model. For example, returning to FIG. 4, the electrical transition 431 is created on the electrical step 470 to correspond to the mechanical transition 272 on the mechanical step 262. The electrical transitions 432, 433, 434, 435 are similarly created to correspond to mechanical transitions of the mechanical model.

The electrical logic controller behavior model 400 also includes representations of sensor signals 481, 482, 483, 484 associated with the devices 410, 420. For example, signal 481 indicates, in its "true" state, that the pusher 410 is in the "back" position, and signal 482 indicates, in its "true" state, that the pusher 410 is in the "front" position. The signals 483, 484 similarly indicate the "up" and "down" positions, respectively, of the lifter 420.

Each of the signals is associated with a mechanical state/position of a device. The signal 481, for example, is associated with the end position of the mechanical step 266, wherein the pusher is returned to the "back" position. The signal 482 is associated with the end position of the mechanical step 262, wherein the pusher is advanced to the "front" position. The signals 483, 484 are similarly associated with positions used in mechanical steps performed by the lifter 420.

To create the electrical logic controller behavior model 400, for each signal associated with an end position of a mechanical step, a condition is created for that signal on the electrical transition on that end position. For example, the condition 491 is created on the electrical transition 431 for the signal 482. In other words, the electrical transition 431 cannot take place until the signal 482 becomes "true." In mechanical terms, the condition 491 requires that the pusher 410 be in the "front" position, as indicated by the signal 482, before the lifter 420 begins movement from the "up" position to the "down" position.

Similarly, the condition 493 is created on the electrical transition 434 for the signal 484; the condition 492 is created on the electrical transition 433 for the signal 481, and the condition 494 is created on the electrical transition 435 for the signal 483.

The intermediate electrical logic controller behavior model 400 described in the present disclosure may be used in automatically or semi-automatically generating PLC software for use in an industrial application. While the intermediate electrical logic controller behavior model is in a format that is independent of any proprietary or other PLC-specific language, the PLC software generated from that model may be generated in any format required by any particular PLC.

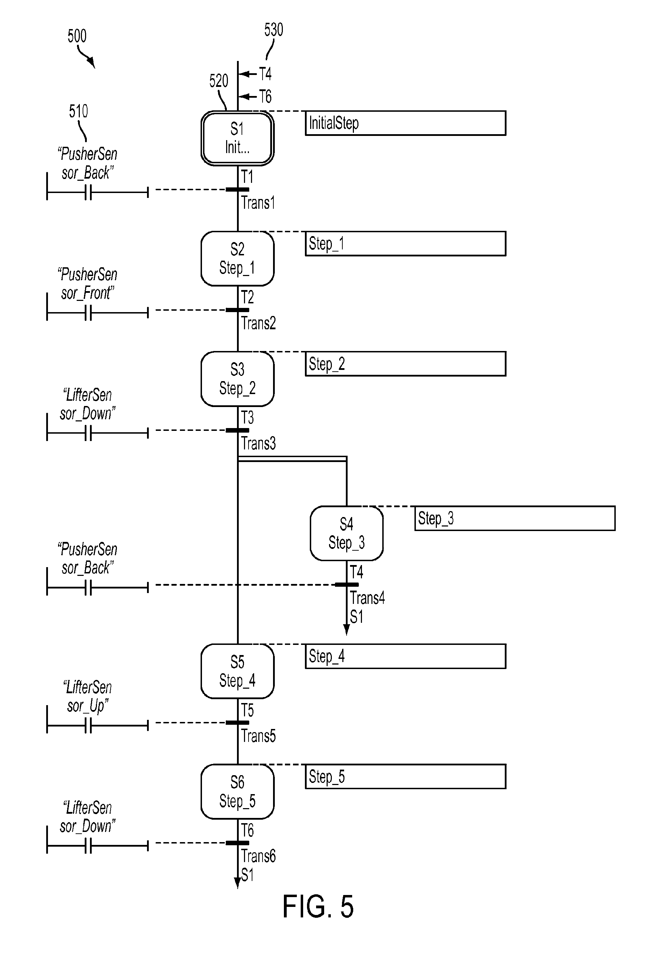

An example representation 500 of a PLC program with corresponding step chain is shown in FIG. 5. Each of the steps 520 and transitions 530 are based on corresponding electrical steps and transitions of the electrical logic controller behavior model. The conditions 510 are generated directly from the condition information of the electrical model. The representation was generated automatically using the above process.

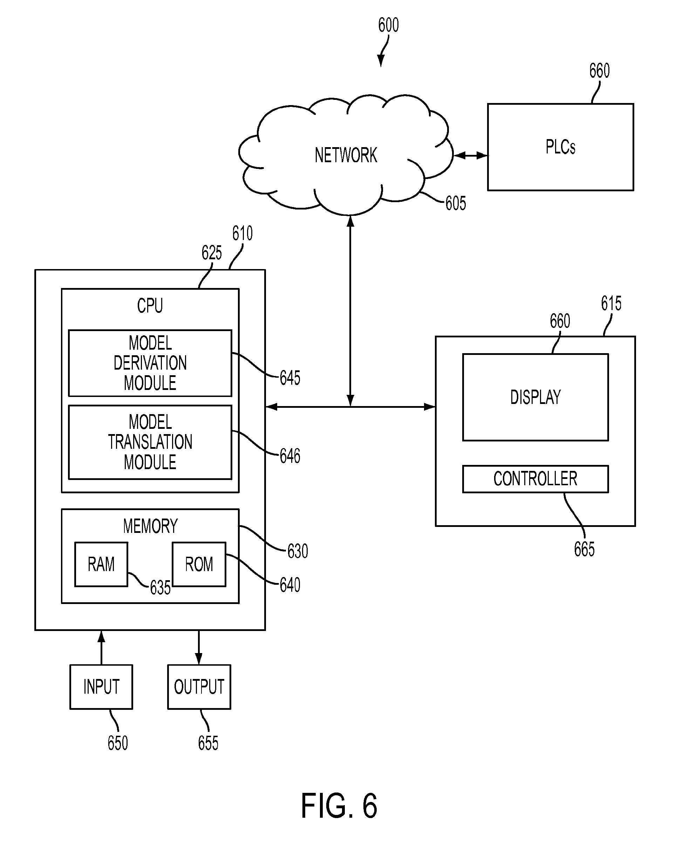

The present invention may be embodied in a system for the automated derivation of a logic-controller-behavior-model. FIG. 6 illustrates a system 600 for deriving a model according to an exemplary embodiment of the present invention. As shown in FIG. 6, the system 600 includes a personal or other computer (PC) 610 and an operator's console 615. The system may be connected to one or more PLCs 660 over a wired or wireless network 605.

The PC 610, which may be a portable or laptop computer or a mainframe or other computer configuration, includes a central processing unit (CPU) 625 and a memory 630 connected to an input device 650 and an output device 655. The CPU 625 includes a model derivation module 645 and a model translation module 646 that include one or more methods for deriving an electrical logic controller behavior model and programming a PLC as discussed herein. Although shown inside the CPU 625, the model derivation module 645 and the model translation module 646 can be located outside the CPU 625. For example, the model translation module may be associated with the PLCs 660.

The memory 630 includes a random access memory (RAM) 635 and a read-only memory (ROM) 640. The memory 630 can also include a database, disk drive, tape drive, etc., or a combination thereof. The RAM 635 functions as a data memory that stores data used during execution of a program in the CPU 625 and is used as a work area. The ROM 640 functions as a program memory for storing a program executed in the CPU 625. The program may reside on the ROM 640 or on any other computer-usable medium as computer readable instructions stored thereon for execution by the CPU 625 or other processor to perform the methods of the invention. The input 650 is constituted by a keyboard, mouse, network interface, etc., and the output 655 is constituted by a liquid crystal display (LCD), cathode ray tube (CRT) display, printer, etc.

The operation of the system 600 can be controlled from the operator's console 615, which includes a controller 665, e.g., a keyboard, and a display 660. The operator's console 615 communicates with the PC 610 and through a network, a bus or other means so that a model created by the module 645 can be rendered by the PC 610 and viewed on the display 660. The PC 610 can be configured to operate and display information by using, e.g., the input 650 and output 655 devices to execute certain tasks. Program inputs, such as a mechanical machine operation model, may be input through the input 650 or may be stored in memory 630.

### Conclusion

Through the described automation or partial automation in the process of PLC program-creation, the disclosed methods provide benefits to both mechanical and electrical engineers. The disclosed creation process for PLC programs is less error-prone than a process using traditional methods, because the traditional process involves more manual abstraction and complexities for the engineer. That reduction in errors saves time and resources in the testing phase of the implementation.

The lower complexity leads naturally to a shorter development cycle. That effectively reduces the implementation duration for a plant and thus reduces the total cost.

The introduced electrical logic controller behavior model is intentionally kept independent of the particularities of real PLC systems (e.g., Siemens or Rockwell). That permits a further automated generation process for a variety of different target systems. The resulting flexibility allows an engineer to switch the hardware in the plant with less effort in re-implementing the PLC program.

Finally, the described methods may be integrated into a software tool that, for example, allows graphical sequence editing. If the electrical model is stored in an open XML format, it can be easily read in for further steps such as target system generation.

The disclosed methods may be integrated in a sequencing tool that is also a tool for planning machine behavior. The electrical information in the electrical logic controller behavior model may be used as a base to create hardware-system-specifi PLC programs. The electrical view of the sequencing tool is a step chain where the steps and conditions are automatically created based on the mechanical information that the user created in the mechanical view. Such a tool allows the quick and comfortable creation of mechanical machine operation models, automatically derives electrical information and then allows a quick and easy editing of this electrical model.

The foregoing Detailed Description is to be understood as being in every respect illustrative and exemplary, but not restrictive, and the scope of the invention disclosed herein is not to be determined from the Description of the Invention, but rather from the Claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention.

## Claims

1. A method for programming a logic controller using a mechanical machine operation model, the mechanical machine operation model including a plurality of mechanical steps, a plurality of mechanical transitions, each mechanical transition being between a sequential pair of mechanical steps, the method comprising:
(A) identifying electrical signals associated with end positions of the mechanical steps;
(B) in a computer, creating an electrical logic controller behavior model based on the mechanical machine operation model, by performing the following steps for each mechanical step of the mechanical machine operation model:
(1) creating an electrical step corresponding to the mechanical step;
(2) for each mechanical transition on the mechanical step, creating a corresponding electrical transition on the corresponding electrical step; and
(3) for each identified signal associated with an end position of the mechanical step, creating a condition for the associated signal on the corresponding electrical transition; and
(C) translating the electrical logic controller behavior model to a program for execution by the logic controller.

2. The method of claim 1, wherein the electrical logic controller behavior model is independent of a logic controller language used in the logic controller.

3. The method of claim 2, wherein the step of translating the electrical logic controller behavior model to a program for execution by the logic controller includes translating to the logic controller language used in the logic controller.

4. The method of claim 1, wherein the step of identifying electrical signals associated with end positions of the mechanical steps includes identifying signals that change state at an end position of a mechanical step.

5. The method of claim 1, wherein the step of creating an electrical logic controller behavior model further comprises:
4) adding interlock information to the electrical logic controller behavior model by creating additional conditions.

6. The method of claim 1, wherein the step of creating an electrical logic controller behavior model further comprises:
4) adding signal output values to one or more electrical steps.

7. The method of claim 6, wherein the signal output values comprise timeout detection.

8. The method of claim 1, wherein the step of creating an electrical logic controller behavior model based on the mechanical machine operation model is performed using a combined electrical/mechanical representation of the models.

9. The method of claim 1, wherein the step of identifying electrical signals associated with end positions of the mechanical steps is performed manually.

10. The method of claim 1, wherein at least one of the mechanical steps of the mechanical machine operation model includes information describing behavior between a start and an end of the mechanical step.

11. The method of claim 1, wherein the step of creating an electrical step corresponding to the mechanical step further comprises creating more than one electrical step corresponding to the mechanical step,

12. A computer-usable medium having computer readable instructions stored thereon for execution by a processor to perform the method according to any one of the preceding claims.
